# EUROPÄISCHE PATENTSCHRIFT

(11) **EP 0 796 289 B1**
(45) Veröffentlichungstag und Bekanntmachung des Hinweises auf die Patenterteilung: **09.05.2001**
(21) Anmeldenummer: 95942071.2
(22) Anmeldetag: 07.12.1995
(51) Int. Cl.: C08J 3/28, B29B 9/16

(54) **VERFAHREN ZUM CHEMISCHEN MODIFIZIEREN VON ALKYLGRUPPENHALTIGEN THERMOPLASTEN**
PROCESS FOR CHEMICALLY MODIFYING THERMOPLASTICS CONTAINING ALKYL GROUPS
PROCEDE DE MODIFICATION CHIMIQUE DE THERMOPLASTES RENFERMANT DES GROUPES ALKYLE

(30) Priorität: 08.12.1994 DE 4445048
(43) Veröffentlichungstag der Anmeldung: 24.09.1997
(73) Patentinhaber: ARPLAS Gesellschaft für Plasmatechnologie mbH, 06766 Wolfen-Thalheim (DE)
(72) Erfinder: BERGER, Steffen, D-40625 Düsseldorf (DE)
(74) Vertreter: Schneider, Henry, Dipl.-Ing.
(86) Internationale Anmeldenummer: EP9504798
(87) Internationale Veröffentlichungsnummer: WO9617882

(56) Entgegenhaltungen:
- WO-A-86/02023
- WO-A-95/03344
- WO-A-95/07946
- WO-A-96/15853
- DE-A- 4 141 805
- US-A- 4 626 473
- US-A- 5 234 723
- US-A- 5 283 086
- DATABASE WPI Derwent Publications Ltd., London, GB; AN 92-412062[50] & JP,A,04 309 532 (MATSUSHITA ELEC. IND. CO. LTD.) , 2.November 1992
- DATABASE WPI Derwent Publications Ltd., London, GB; AN 94-018739[03] & JP,A,05 323 666 (SHIZUOKA KEN ET AL) , 7.Dezember 1993

## Beschreibung

Die Erfindung betrifft ein Verfahren zum chemischen Modifizieren von alkylgruppenhaltigen Thermoplasten und chemisch modifizierte alkylgruppenhaltige Thermoplaste.

Es ist bekannt, daß alkygruppenhaltige Thermoplaste, beispielsweise Polyolefine und Polyolefincopolymere, auf vielen Gebieten eingesetzt werden können. Werden Formteile oder Folien aus den alkylgruppenhaltigen Thermoplasten hergestellt, und sollen diese anschließend beispielsweise lackiert, beschichtet, bedruckt oder verklebt werden, ist eine Vorbehandlung der Formteile und Folien notwendig. Diese Vorbehandlung besteht beispielsweise in einer Beflammung, einer Coronabehandlung oder einer Plasmabehandlung. Hierbei ist neben der geringen Selektivität und Variabilität der bekannten Behandlungsverfahren nachteilig, daß ein erhöhter technischer Aufwand durch die Bereitstellung der Behandlungseinrichtungen notwendig ist und durch eine unterschiedliche Geometrie der Formteile und Folien relativ großvolumige Behandlungseinrichtungen erforderlich sind.

Aus Kunststoff-Taschenbuch, 25. Ausgabe, Seite 248 bis 259, ist ein Verfahren zur Nachbehandlung von alkylgruppenhaltigen Feststoffen bekannt. Hierbei wird die Oberfläche des alkylgruppenhaltigen Feststoffes, beispielsweise eine PE-Oberfläche, mittels eines Hochspannungsplasmas behandelt, um eine lokale chemische Modifizierung zu erreichen. Auf Grund dieser lokalen Oberflächenbehandlung, beispielsweise bei Formteilen, wird eine Verbesserung der Lackierbarkeit beziehungsweise Bedruckbarkeit erreicht. Hierbei ist jedoch nachteilig, daß eine zusätzliche Nachbehandlung erfolgen muß, deren Anwendung auf Grund der Bereitstellung einer Hochspannungs-Plasmaanlage für das fertige Erzeugnis nur im begrenzten Umfang möglich ist.

Aus der DE 41 41 805 A1 ist ein Verfahren und eine Vorrichtung zur Herstellung von thermoplastischen Kunststoffteilen mit Hilfe von Niedertemperaturplasmen bekannt, bei denen die Plasmabehandlung entweder mit einer Mikrowellenfrequenz von 2,45 GHz oder einer Radiofrequenz von 13,56 MHz oder 27,12 MHz durchgeführt wird. Die US-PS 5,234,723 offenbart eine kontinuierlich betreibbare Plasmabehandlungsanlage, bei der pulverförmiges Material aufgrund der Schwerkraft durch einen Behandlungsbehälter geführt werden kann. Hierbei erfolgt eine Plasmaanregung mit einer konstanten Frequenz von 13,56 MHz. Aus der JP 94/018739 ist ein Verfahren zur Behandlung eines Tuner-Pulvers mit einem Plasma bekannt. Hier wird eine Plasmareinigung mit 13,56 MHz verwendet.

Aus der WO-A-96/15853 ist bekannt, eine Schmelze aus alkylgruppenhaltigen Feststoffen mittels einer Plasmabehandlung zu modifizieren. Ferner sind aus der WO-A-95/07946 und WO-A-95/03344 Verfahren bekannt, bei denen Polyolefine mittels eines Plasmas behandelt werden.

Der Erfindung liegt daher die Aufgabe zugrunde, ein Verfahren der gattungsgemäßen Art zu schaffen, mit dem in einfacher und kostengünstiger Weise eine chemische Modifizierung von alkylgruppenhaltigen Thermoplasten möglich ist.

Erfindungsgemäß wird diese Aufgabe dadurch gelöst, daß die alkylgruppenhaltigen Thermoplaste granuliert und einer Plasmabehandlung mit wechselnden Frequenzen in einem Frequenzbereich von 10 kHz bis 10 GHz unterzogen werden. Es wurde überraschenderweise gefunden, daß durch die Überführung der alkylgruppenhaltigen Thermoplaste in eine Granulatform und deren Plasmabehandlung mit wechselnden Frequenzen innerhalb der alkylgruppenhaltigen Thermoplaste gezielt eine Veränderung von Materialeigenschaften herbeiführbar ist. Durch die Überführung in die Granulatform läßt sich eine qualitativ und quantitativ hochwertige chemische Modifizierung erreichen. Insbesondere lassen sich durch die Plasmabehandlung der granulierten Thermoplaste chemische Spezialprodukte erzielen, die auf vielfältige Weise eingesetzt werden können, ohne daß es einer nochmaligen aufwendigen Nachbehandlung bedarf. Insbesondere sind aus den behandelten Thermoplasten hergestellte Formkörper und Folien ohne weitere Vor- bzw. Nachbehandlung beispielsweise lackierbar, beschichtbar, bedruckbar, verklebbar usw. Ein Grad der chemischen Modifizierung der alkylgruppenhaltigen Thermoplaste läßt sich in einfacher Weise vorzugsweise durch eine Einstellung einer Korngröße des Granulats und/oder von Parametern der Plasmabehandlung erreichen.

In vorteilhafter Ausgestaltung der Erfindung ist vorgesehen, daß die Plasmabehandlung mit Kombinationen verschieden hoher wechselnder Frequenzen durchgeführt wird. So kann sehr vorteilhaft die Plasmabehandlung mit nacheinander zuschaltbaren Frequenzen, mit abwechselnd zuschaltbaren, unterschiedlich hohen Frequenzen, mit wenigstens zwei gleichzeitig zuschaltbaren, verschieden hohen Frequenzen und sich hieraus ergebenden Kombinationen an Frequenzzuschaltungen durchgeführt werden. Hierdurch kann die chemische Modifizierung sehr vorteilhaft auf den unterschiedlichen chemischen Aufbau der eingesetzten alkylgruppenhaltigen Thermoplaste sowie deren Verwendungszweck nach der chemischen Modifizierung abgestimmt werden.

In weiterer vorteilhafter Ausgestaltung der Erfindung ist vorgesehen, daß die Plasmabehandlung unter Zufuhr wenigstens eines Inertgases, beispielsweise Helium und/oder Argon, und/oder unter Zufuhr wenigstens eines Reaktionsgases, beispielsweise Sauerstoff und/oder Stickstoff und/oder Monomere, durchgeführt wird. Weiterhin bevorzugt ist, wenn die Plasmabehandlung nacheinander mit einem Inertgasplasma und wenigstens einem Reaktionsgasplasma und/oder einem Reaktionsgasplasmagemisch oder unter Zufuhr eines Gemisches aus wenigstens einem Inertgas und einem Reaktionsgas durchgeführt wird. Durch Auswahl einer auf die zu modifizierenden alkylgruppenhaltigen Thermoplaste abgestimmten Zusammensetzung des Prozeßgases während der Plasmabehandlung (Inertgas, Reaktionsgas, Reaktionsgasgemisch) ist es möglich, in die granulierten Thermoplaste die zur chemischen Modifizierung erforderlichen reaktiven Gruppen, beispielsweise Hydroxylgruppen, Karboxylgruppen, primäre und sekundäre Aminogruppen, in ausreichendem Maße einzubauen. Diese eingebauten Gruppen sind in der Lage, mit dem alkylgruppenhaltigen Thermoplast zu reagieren und chemische Bindungen einzugehen und/oder physikalisch zu haften. Weitere einbaubare polare, aber nicht reaktive Gruppen, beispielsweise Karbonylgruppen, tertiäre Aminogruppen können ebenfalls eine Eigenschaftsänderung der alkylgruppenhaltigen Thermoplaste bewirken. Durch Überführung der alkylgruppenhaltigen Thermoplaste in die Granulatform ist eine relativ homogene Modifizierung der alkylgruppenhaltigen Thermoplaste mit den während der Plasmabehandlung eingebauten reaktiven beziehungsweise nichtreaktiven Gruppen möglich.

Die behandelten Thermoplaste besitzen somit eine relativ homogene Verteilung der eingebrachten reaktiven beziehungsweise nichtreaktiven Gruppen über die gesamte Raumausdehnung (Granulatschüttung) der alkylgruppenhaltigen Thermoplaste. Es sind somit alkylgruppenhaltige Thermoplaste jeglicher Art erzielbar, die nach der Plasmabehandlung für bestimmte Anwendungsfälle geeignet sind, wobei eine weitere nachfolgende Behandlung nicht mehr notwendig ist. Die Einstellung der alkylgruppenhaltigen Thermoplaste auf ihren speziellen Anwendungsfall kann in einfacher Weise durch die erfindungsgemäße Plasmabehandlung eines Granulats der alkylgruppenhaltigen Thermoplaste erfolgen.

Insgesamt wurde der überraschende Effekt der Erfindung ausgenutzt, daß polymerspezifische Kenngrößen wie Molekulargewicht und Molekulargewichtsverteilung sowie eine Copolymerzusammensetzung keinen signifikanten Einfluß auf die Stärke des durch die Plasmabehandlung erzielten Effektes haben, sondern hierfür vor allem der Gehalt an Alkylgruppen im Ausgangsmaterial entscheidend ist. Durch eine Auswahl einer auf den chemischen Aufbau des Ausgangsmaterials abgestimmten Zusammensetzung der Prozeßgase sowie einer insbesondere darauf abgestimmten Abfolge von Frequenzkombinationen ist es möglich, verschiedene funktionale Gruppen in Ausrichtung auf die am Formteil beziehungsweise an der Folie vorzunehmende Art der Weiterverarbeitung, beispielsweise der Lackierung, Beschichtung, Bedruckung oder Verklebung, einzubauen. Die Erfindung wird nachfolgend in einem Ausführungsbeispiel anhand der zugehörigen Zeichnungen näher erläutert. Es zeigen:
- Figur 1: einen Verfahrensablauf zur Behandlung von alkylgruppenhaltigen Thermoplasten in einem Flußdiagramm und
- Figur 2: eine schematische Darstellung einer Anordnung zur Durchführung des Verfahrens.

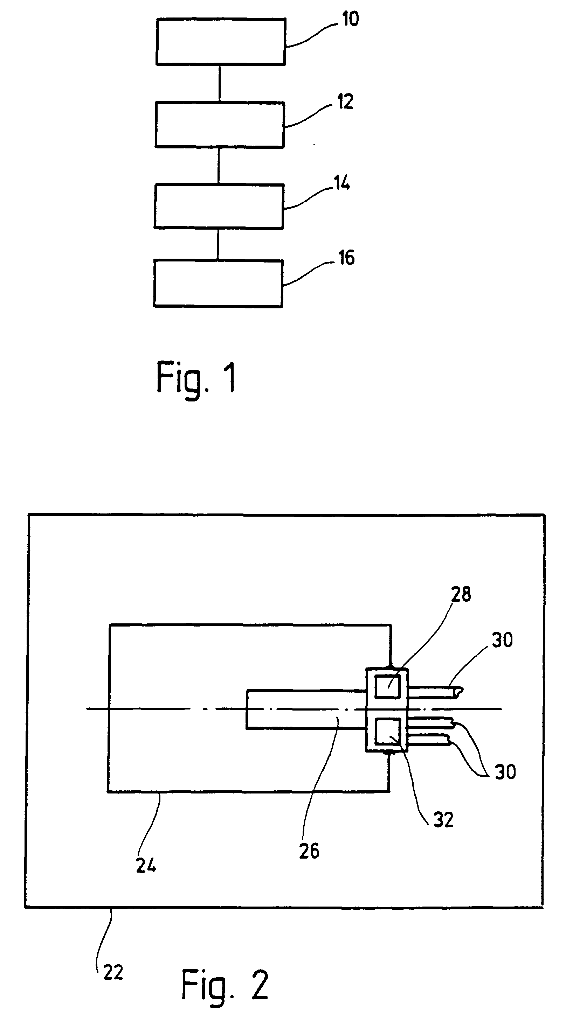

In der Figur 1 soll das erfindungsgemäße Verfahren mit Hilfe eines Diagrammes verdeutlicht werden. In einem ersten Schritt 10 werden die als Ausgangsmaterialien zur Verfügung stehenden alkylgruppenhaltigen Thermoplaste vorbereitet. Die Thermoplaste werden hier in eine Granulatform gebracht, deren Körnungsgröße beispielsweise kleiner als 3 mm ist, wobei gegebenenfalls erforderliche Zusätze, wie beispielsweise Stabilisatoren, zugegeben werden. Als Ausgangsmaterialien können sowohl neuwertige Thermoplaste als auch aus Recyclingmaterial gewonnene Thermoplaste verwendet werden. Bei Thermoplasten aus Recyclingmaterial ist zu beachten, daß diese nicht zu stark geschädigt sind, das heißt, daß noch eine geeignete Molekularstruktur vorhanden ist. In einem nächsten Schritt 12 wird das vorbereitete Ausgangsmaterial in eine Prozeßkammer gegeben. Die Prozeßkammer kann dabei beispielsweise eine Drehtrommel eines an sich bekannten Plasmaofens zur Durchführung einer Plasmabehandlung sein.

In einem nächsten Schritt 14 werden die für die Behandlung des Ausgangsmaterials gewünschten Prozeßparameter und Prozeßgase eingestellt. Hierbei werden insbesondere die speziellen Kombinationen der Prozeßgase, das heißt, eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff und/oder Monomere oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitliche Abfolge. So sind Varianten denkbar, in der erst mit einer niederen Frequenz, beispielsweise 13,56 MHz, und anschließend mit einer höheren Frequenz, beispielsweise 2,45 GHz, eine Plasmabehandlung durchgeführt wird. Darüber hinaus ist eine alternierende Zuschaltung der Frequenzen denkbar. Selbstverständlich können auch andere Frequenzen in beliebiger, frei wählbarer Reihenfolge zur Durchführung der Plasmabehandlung eingestellt werden. Weiterhin kann eine alternierende, gegebenenfalls auch gleichzeitige Zuschaltung verschieden hoher Frequenzen vorgegeben werden. Im übrigen wird die gewünschte Drehzahl der Drehtrommel, beispielsweise im Bereich zwischen 4 und 20 Umdrehungen pro Minute, sowie der gewünschte Prozeßdruck, der beispielsweise im Bereich zwischen 0,1 mbar und 2 mbar liegt, eingestellt. Während der Plasmabehandlung kann der Prozeßdruck verfahrensbedingt Schwankungen unterliegen. Weiterhin wird die Behandlungsdauer festgelegt, mit der die Behandlung des Ausgangsmaterials erfolgt. Diese beträgt beispielsweise zwischen 5 und 900 s. Die genannten Prozeßparameter beziehungsweise Prozeßgase können untereinander in beliebiger Zusammenstellung variiert werden und sind insbesondere auf die Zusammensetzung des jeweiligen konkret vorliegenden Ausgangsmaterials abgestimmt.

In einem nächsten Schritt 16 erfolgt dann die Plasmabehandlung des Ausgangsmaterials mit den in dem Schritt 14 eingestellten Prozeßparametern beziehungsweise Prozeßbedingungen. Hierbei ist es ebenfalls denkbar, daß während der Plasmabehandlung in dem Schritt 16 eine Veränderung und/oder Anpassung der Prozeßparameter, beispielsweise durch eine Regelung, erfolgen kann. Durch die beschriebene Kombination der Prozeßgase und der Prozeßparameter der Plasmabehandlung ist der zum Zweck einer nachfolgenden Bearbeitung der alkylgruppenhaltigen Thermoplaste erforderliche Einbau reaktiver Gruppen in Abhängigkeit von dem eingesetzten Ausgangsmaterial in die Thermoplaste in ausreichendem Maße erreichbar.

Die mit dem erfindungsgemäßen Verfahren behandelten Thermoplaste können anschließend mittels geeigneter Vorrichtungen, wie beispielsweise Extruder, Zieheinrichtungen usw. zu Formkörpern oder Folien verarbeitet werden.

Das erfindungsgemäße Verfahren beschränkt sich nicht darauf, ein bestimmtes alkylgruppenhaltiges Thermoplast zu behandeln. So ist es möglich, Gemische verschiedener alkylgruppenhaltiger Thermoplaste in einer wählbaren Zusammensetzung der Plasmabehandlung zu unterziehen. Dies ist in einfacher Weise möglich, indem die in Granulatform vorliegenden verschiedenen alkylgruppenhaltigen Thermoplaste in bestimmten, jeweils wählbaren Mengeneinheiten gemischt werden. Weiterhin ist es möglich, vor und/oder nach der Plasmabehandlung eine Compoundierung oder ein Blending der Thermoplaste vorzunehmen.

In der Figur 2 ist schematisch der Aufbau einer für das Verfahren einsetzbaren Vorrichtung gezeigt. Eine allgemein mit 22 bezeichnete Plasmaanlage weist eine Drehtrommel 24 auf. Die Drehtrommel 24 dient als Prozeßkammer und kann beispielsweise aus einem beständigen Material wie Aluminium oder Edelstahl bestehen. Die Prozeßkammer ist zur Erzeugung eines Vakuums hermetisch abschließbar, wobei hier auf Einzelheiten nicht weiter eingegangen werden soll. Der Drehtrommel 24 ist eine als Reaktor dienende Einrichtung 26 zugeordnet, die mit einem Generator 28 zur Mikrowellenplasmaanregung und einer Hochfrequenzeinspeisung 32 gekoppelt ist. Weiterhin sind Zuleitungen 30 zum Heranführen von Prozeßgasen vorgesehen.

Die hier dargestellte Anordnung ist nur beispielhaft, und die Erfindung bezieht sich im einzelnen nicht auf den konkreten Aufbau der Anlage. Das erfindungsgemäße Verfahren kann selbstverständlich auch mit einer analogen, die einzelnen Verfahrensschritte vollziehenden Vorrichtung durchgeführt werden.

Das erfindungsgemäße Verfahren läuft nunmehr auf folgende Weise ab. Das ausgewählte und vorbereitete alkylgruppenhaltige Thermoplast (gegebenenfalls ein Gemisch aus verschiedenen Thermoplasten) wird in die Drehtrommel 24 gegeben und dort entsprechend der gewählten Drehgeschwindigkeit und Drehrichtung, die auch abwechselnd gewählt werden kann, vermischt. Über die Zuleitungen 30 wird das gewählte Prozeßgas beziehungsweise Prozeßgasgemisch zugeführt und über den Generator 28 in dem Reaktor 26 ein Plasma erzeugt. Die Plasmaerzeugung kann hierbei vorzugsweise mit einer Mikrowelleneinstrahlung bei Leistungen zwischen 200 und 1500 W (2,45 GHz) erfolgen. Das Prozeßgas oder Prozeßgasgemisch weist hierbei vorzugsweise einen Prozeßdruck zwischen 0,1 und 2 mbar auf. Über die Hochfrequenzeinspeisung 32 wird eine Frequenz von beispielsweise 13,56 MHz angelegt und ein Plasma erzeugt. Aus dem erzeugten Plasma treffen aktivierte Teilchen auf das in die Drehtrommel 24 eingefüllte Ausgangsmaterial auf. Dies bewirkt eine Strukturveränderung innerhalb des Ausgangsmaterials, also des eingefüllten Thermoplasts, in Form des Einbaus von polaren Gruppen (sauerstoff- und/oder stickstoffhaltig). Diese polaren Gruppen sind sowohl reaktive Gruppen (Hydroxylgruppen, Carboxylgruppen, primäre und sekundäre Aminogruppen) als auch nicht reaktive Gruppen (Kabonylgruppen, tertiäre Aminogruppen). Eine Vernetzung findet nicht statt. Durch entsprechende wechselnde Zuführung von unterschiedlichen Prozeßgasen über die Zuleitungen 30 und unterschiedliches Anlegen von Frequenzen über den Generator 28 beziehungsweise die Hochfrequenzeinspeisung 32, kann auf unterschiedliche Zusammensetzungen der Thermoplaste Einfluß genommen werden.

In einem konkreten Beispiel wird in die Drehtrommel 24 ein ABS-Granulat mit einer Korngröße kleiner 3 mm eingefüllt. Als Prozeßparameter wird ein Prozeßdruck von 0,7 mbar bei einer Umdrehungsgeschwindigkeit von 7 Umdrehungen pro Minute der Drehtrommel 24 eingestellt. Die Leistung des Generators 28 beträgt 1200 W und die der Hochfrequenzeinspeisung 32 600 W. Als Prozeßgase werden Argon, Sauerstoff und Stickstoff zugeführt und der eingebrachte Ausgangsstoff für die Dauer von insgesamt 300 s plasmabehandelt. Im einzelnen erfolgt eine Behandlung mit einem Argonplasma für 30 s unter Hochfrequenzanregung und 30 s unter Mikrowellenanregung, mit einem Sauerstoffplasma für 60 s unter Hochfrequenzanregung und 60 s unter Mikrowellenanregung sowie mit einem Stickstoffplasma für 60 s unter Hochfrequenzanregung und 60 s unter Mikrowellenanregung. Der Generator 28 erzeugt dabei eine Frequenz von 2,45 GHz und die Hochfrequenzeinspeisung 32 eine Frequenz von 13,56 MHz.

Nach Beendigung der Plasmabehandlung kann das ABS-Granulat beispielsweise geschmolzen und auf eine als Träger dienende Glasplatte aufgebracht werden. Nach Erstarren der Schmelze des ABS-Granulates haftet dieses ohne Haftvermittler fest an der Glasplatte. Die aus den alkylgruppenhaltigen Feststoffen aufgebrachte Schicht kann nunmehr ohne weitere Zwischenbehandlung direkt bearbeitet, beispielsweise bedruckt, beklebt, beschichtet usw. werden. Durch die Behandlung mit den Prozeßgasplasmen (Inertgasplasma, Reaktionsgasplasma) wurden in dem ABS-Granulat sauerstoff- und stickstoffhaltige polare Gruppen eingebaut, die zu einer chemischen Modifizierung des Ausgangsmaterials führen.

Diese Strukturveränderung wirkt sich beispielsweise durch eine Veränderung der Oberflächeneigenschaften aus. Mittels eines Wassertestes kann eine deutlich verbesserte Benetzbarkeit des erfindungsgemäß behandelten Thermoplastes gegenüber einem unbehandeltem Thermoplast nachgewiesen werden.

## Patentansprüche

1. Verfahren zum chemischen Modifizieren von alkylgruppenhaltigen Thermoplasten, mit Ausnahme von Polyolefinen, die zur Herstellung eines Beschichtungsmaterials und/oder Schmelzklebers einsetzbar sind, **dadurch gekennzeichnet,** daß die alkylgruppenhaltigen Thermoplaste granuliert und als Granulat einer Plasmabehandlung mit wechselnden Frequenzen in einem Frequenzbereich von 10 kHz bis 10 GHz unterzogen wird.

2. Verfahren nach Anspruch 1, **dadurch gekennzeichnet,** daß die Plasmabehandlung mit einer Kombination verschieden hoher wechselnder Frequenzen durchgeführt wird.

3. Verfahren nach einem der vorhergehenden Ansprüche, **dadurch gekennzeichnet,** daß die Plasmabehandlung unter Zufuhr mindestens eines Inertgases durchgeführt wird.

4. Verfahren nach einem der vorhergehenden Ansprüche, **dadurch gekennzeichnet,** daß die Plasmabehandlung unter Zufuhr mindestens eines Reaktionsgases durchgeführt wird.

5. Verfahren nach einem der vorhergehenden Ansprüche, **dadurch gekennzeichnet,** daß die Plasmabehandlung nacheinander mit wenigstens einem Inertgasplasma, wenigstens einem Reaktionsgasplasma oder unter Zufuhr eines Gemischs aus wenigstens einem Inertgas und wenigstens einem Reaktionsgas durchgeführt wird.

6. Verfahren nach einem der vorhergehenden Ansprüche, **gekennzeichnet durch** eine alternierende Plasmabehandlung mit wenigstens einem Inertgasplasma, wenigstens einem Reaktionsgasplasma und wenigstens einem Gemisch eines Inertgas-Reaktionsgas-Plasmas.

7. Verfahren nach einem der vorhergehenden Ansprüche, **dadurch gekennzeichnet,** daß vor und/oder nach der Plasmabehandlung ein Blending vorgenommen wird.

8. Verfahren nach einem der vorhergehenden Ansprüche, **dadurch gekennzeichnet,** daß die Plasmabehandlung bei einem Prozeßdruck von 0,1 mbar bis 2 mbar erfolgt.

9. Verfahren nach einem der vorhergehenden Ansprüche, **dadurch gekennzeichnet,** daß die Dauer der Plasmabehandlung zwischen 5 Sekunden und 900 Sekunden beträgt.

10. Verfahren nach einem der vorhergehenden Ansprüche, **dadurch gekennzeichnet,** daß die granulierten alkylgruppenhaltigen Thermoplaste während der Plasmabehandlung gemischt/verrührt werden.

## Claims

1. A process for chemically modifying thermoplastics containing alkyl groups, with the exception of polyolefins, usable for producing a coating material and/or a hot-melt adhesive, **characterized in that** the thermoplastics containing alkyl groups are granulated and subjected in form of granules to a plasma treatment at varying frequencies in a frequency range of 10 kHz to 10 GHz.

2. A process according to claim 1, **characterized in that** the plasma treatment is carried out at a combination of varying frequencies of different levels.

3. A process according to one of the proceeding claims, **characterized in that** the plasma treatment is carried out while at least one inert gas is supplied.

4. A process according to one of the proceeding claims, **characterized in that** the plasma treatment is carried out while at least one reaction gas is supplied.

5. A process according to one of the proceeding claims, **characterized in that** the plasma treatment is carried out successively with at least one inert-gas plasma, at least one reaction-gas plasma or while a mixture of at least one inert gas and at least one reaction gas is supplied.

6. A process according to one of the proceeding claims, **characterized by** an alternating plasma treatment with at least one inert-gas plasma, at least one reaction-gas plasma and at least one mixture of an inert-gas/reaction-gas plasma.

7. A process according to one of the proceeding claims, **characterized in that** a blending is carried out before and/or after the plasma treatment.

8. A process according to one of the proceeding claims, **characterized in that** the plasma treatment is carried out at a process pressure of 0.1 mbar to 2 mbar.

9. A process according to one of the proceeding claims, **characterized in that** the duration of the plasma treatment is between 5 seconds to 900 seconds.

10. A process according to one of the proceeding claims, **characterized in that** the granulated thermoplastics containing alkyl groups are mixed/stirred during the plasma treatment.

## Revendications

1. Procédé de modification chimique de thermoplastes contenant des groupes alkyle, à l'exception des polyoléfines, utilisable pour la fabrication d'une matière revêtement et/ou d'une colle thermofusible, procédé **caractérisé en ce** qu'on granule les thermoplastes contenant des groupes alkyle et on soumet le granulé à un traitement par du plasma à des fréquences variables dans un domaine des fréquences de 10 kHz à 10 GHz.

2. Procédé selon la revendication 1, **caractérisé en ce** que le traitement par du plasma est effectué à l'aide d'une combinaison de différentes hautes fréquences variables.

3. Procédé selon l'une des revendications précédentes, **caractérisé en ce** que le traitement par du plasma est effectué avec acheminement d'arrivée d'au moins un gaz inerte.

4. Procédé selon l'une des revendications précédentes, **caractérisé en ce** que le traitement par du plasma est effectué avec acheminement d'arrivée d'au moins un gaz de réaction.

5. Procédé selon l'une des revendications précédentes, **caractérisé en ce** que le traitement par du plasma est effectué successivement avec au moins un plasma de gaz inerte, au moins un plasma de gaz de réaction ou sous acheminement d'un mélange d'au moins un gaz inerte et d'au moins un gaz de réaction.

6. Procédé selon l'une des revendications précédentes, **caractérisé par** un traitement alterné par des plasmas à l'aide d'au moins un plasma de gaz inerte, au moins un plasma de gaz de réaction et au moins un mélange d'un plasma de gaz inerte et d'un plasma de gaz de réaction.

7. Procédé selon l'une des revendications précédentes, **caractérisé en ce** qu'avant et/ou après le traitement par du plasma, on entreprend une opération de mélangeage.

8. Procédé selon l'une des revendications précédentes, **caractérisé en ce** que le traitement par du plasma est effectué à une pression opératoire de 0,1 mbar à 2 mbar.

9. Procédé selon l'une des revendications précédentes, **caractérisé en ce** que la durée du traitement par du plasma se situe entre 5 secondes et 900 secondes.

10. Procédé selon l'une des revendications précédentes, **caractérisé en ce** que les thermoplastes granulés contenant des groupes alkyle sont soumis à mélangeage/agitation pendant le traitement par du plasma.
